# EUROPÄISCHE PATENTSCHRIFT

(11) **EP 0 743 219 B1**
(45) Veröffentlichungstag und Bekanntmachung des Hinweises auf die Patenterteilung: **01.09.1999**
(21) Anmeldenummer: 96101074.1
(22) Anmeldetag: 25.01.1996
(51) Int. Cl.: B60K 17/356, E01C 19/48, B60K 7/00

(54) **Strassenfertiger**
Road paver
Finisseur

(30) Priorität: 19.05.1995 DE 29508396 U
(43) Veröffentlichungstag der Anmeldung: 20.11.1996
(73) Patentinhaber: Joseph Vögele AG, D-68146 Mannheim (DE)
(72) Erfinder: Braun, Arthur, Dipl.-Ing., 67146 Deidesheim (DE)
(74) Vertreter: Grünecker, Kinkeldey, Stockmair & Schwanhäusser Anwaltssozietät

(56) Entgegenhaltungen:
- EP-A- 0 563 515
- DE-A- 2 921 698
- DE-A- 2 921 756
- DE-A- 3 611 268
- DE-A- 3 807 899
- DE-A- 3 911 229
- DE-A- 4 134 840
- FR-A- 2 548 979
- US-A- 3 053 043
- US-A- 4 140 196
- US-A- 4 546 844
- US-A- 4 635 743

## Beschreibung

Die Erfindung betrifft einen Straßenfertiger der im Oberbegriff des Patentanspruchs 1 angegebenen Art.

Bei einem aus DE-A-36 11 268 bekannten Straßenfertiger ist ein über ein Freilaufventil hydraulisch zuschaltbarer Vorderradantrieb mit je einem Hydromotor pro Vorderrad vorgesehen. Die beiden Hydromotoren sind parallel geschaltet. Dem Freilaufventil ist ein Mengenteiler zugeordnet. Wird der Frontantrieb zugeschaltet, dann ist bauartbedingt die Umfangsgeschwindigkeit der Frontantriebsräder beim Anfahren und während des Zuschaltens kleiner als die der angetriebenen Hinterräder. Der Frontantrieb wirkt dann unzweckmäßigerweise als Bremse. Ferner schleppen die Vorderräder die Hydromotoren in allen Betriebszuständen, bei denen der Vorderradantrieb nicht zugeschaltet ist bzw. die Vorderräder schneller laufen als ihre Hydromotoren.

Aus EP 0 563 515 A1 ist eine Baumaschine wie ein Grader bekannt, der mit einem hydrostatischen Zusatzantrieb für die Vorderräder ausgestattet ist. Eine Stellpumpe für den Zusatzantrieb wird über eine elektronische Steuervorrichtung mit einer von der Drehzahl des Hauptantriebs abhängigen Drehzahl betrieben. Das Fördervolumen der Stellpumpe pro Pumpenumdrehung wird in Abhängkgkeit vom Verhältnis der Drehzahl des Hauptantriebs zur Drehzahl des Antriebsmotors geregelt.

Ein aus US-A-4 546 844 bekannter Grader besitzt einen assistierenden Vorderradantrieb mit jeweils einem Hydromotor, einem pianetenrad-Untersetzungsgetriebe und einem Freilauf zwischen dem Sonnenrad des Planetenradgetriebes und einem großen, vom Hydromotor direkt getriebenen Antriebszahnrad. Zusätzlich ist eine hydraulisch betätigbare Lamellenkupplung zwischen dem Sonnenrad und dem großen Antriebszahnrad vorgesehen, um auch in Rückwärtsfahrtrichtung die Vorderräder antreiben zu können.

Aus DE-A-41 34 840 ist ein Straßenfertiger mit hydrostatischen Einzel-Antriebseinheiten für die angetriebenen Hinterräder bekannt. Weiterer Stand der Technik ist enthalten in : DE-A-3 911 229, DE-A-2 921 698 DE-A-2 921 756, US-A-3 053 043, EP-A-0 563 515, DE-A-3 807 899, FR-A-2 548 979, US-A-4 140 196, DE-A-4 423 867.

Der Erfindung liegt die Aufgabe zugrunde, einen Straßenfertiger der eingangs genannten Art zu schaffen, der sich durch einen baulich einfachen und in keinem Betriebszustand bremsenden Zusatzantrieb von Vorderrädern auszeichnet.

Die gestellte Aufgabe wird erfindungsgemäß mit den im Patentanspruch 1 enthaltenen Merkmalen gelöst.

In allen Betriebszuständen, in denen ein Frontantrieb nicht benötigt wird, verhindert der Freilauf das Mitschleppen des Antriebsmotors jedes antreibbaren Vorderrades, da er selbsttätig den Hydromotor vom Planetenradgetriebe bzw. dem zugehörigen Rad trennt. Es werden auf baulich einfache Weise ein unerwünschtes Bremsen, ein unnötiger Leistungsverlust, eine Erwärmung und zusätzlicher Reifenverschleiß der Räder vermieden. Erst wenn bei Arbeitsfahrt des Straßenfertigers das Vorderrad so schnell läuft wie der zugehörige Hydromotor, der mit den antriebenen Hinterrädern in seiner Drehzahl synchronisiert ist, stellt der Richtungsfreilauf eine formschlüssige Verbindung zwischen dem Hydromotor und dem Rad her, um dieses anzutreiben. Der Straßenfertiger besitzt also einen permanent passiven Allradantrieb, der sich bei Bedarf selbsttätig aktiviert, optimal auf den Untergrund einstellt und ohne Risiken und Nebenwirkungen unauffällig eine sichere Traktion sicherstellt. Der Maschinenführer kann sich auf die mit dem Fertiger durchzuführenden Arbeiten konzentrieren, ohne auf die Steuerung, die Zu- oder die Abschaltung des Vorderradantriebs achten zu müssen.

Es werden bei Vorgabe der Fahrgeschwindigkeit gleich große Drehzahlvorgaben für die linken und rechten Einzel-Antriebseinheiten der antreibbaren Hinterräder eingestellt. Sensoren am linken und rechten Fahrschaltgetriebe erfassen die Ist-Drehzahlen der angetriebenen Räder. Diese werden in der Korrektur- bzw. Regeleinrichtung mit dem gewählten Sollwert der Fahrgeschwindigkeit verglichen und fallweise korrigiert. In Kurven lassen sich die hinteren angetriebenen Räder mit unterschiedlichen Drehzahlen steuern, wobei eine Lenkwinkel-Abtastvorrichtung den Lenkwinkel über die Korrektur- und Regeleinrichtung in eine entsprechende Drehzahldifferenz der antreibbaren Räder, gegebenenfalls auch des Vorderradantriebs, umsetzt. Ferner wird jede Drehzahldifferenz bei positivem oder negativem Zwangsschlupf zwischen den vorderen und hinteren Rädern erfaßt, ausgewertet und werden die Drehzahlen der Vorder- und Hinterräder unmittelbar entsprechend korrigiert.

Bei einer Ausführungsform ist die hydrostatische Antriebseinheit platzsparend im Vorderrad untergebracht, was den in diesem Bereich des Straßenfertigers üblicherweise beschränkten Platzverhältnissen und der Lenkbarkeit zugute kommt.

Bei einer weiteren Ausführungsform läuft der Hydromotor des Vorderrades mit der richtigen Drehzahl, um bei Bedarf eine Traktionshilfe zu leisten. Allerdings wird der permanent passive Allradantrieb bedarfsabhängig nur für den Arbeitsgeschwindigkeitsbereich, z.B. zwischen 1,0 und 20 m/min., tatsächlich zur Mitarbeit aktiviert, während er bei wesentlich höheren Transportgeschwindigkeiten des Straßenfertigers, bis z.B. 25 km/h nicht eingesetzt wird.

Bei einer weiteren Ausführungsform lassen sich die vier oder mehr als vier hydrostatischen Einzelrad-Antriebseinheiten platzsparend im Fertiger und unmittelbar an den antreibbaren Rädern anordnen und relativ einfach steuern bzw. regeln. Es werden keine durchgehenden Getriebeachsen benötigt, was Gewicht und Bauraum spart. Differentialsperrfunktionen lassen sich bei Bedarf einfach realisieren.

Bei einer weiteren Ausführungsform ist innerhalb des Arbeitsgeschwindigkeitsbereichs stets eine elektronische Differentialsperre wirksam, solange der Lenkwinkel einen vorgegebenen Grenzwert nicht erreicht.

Die elektronische Differentialsperre wird bei Überschreiten des vorbestimmten Lenkwinkels automatisch ausgeschaltet; sie kann jedoch für eine kurze Zeitdauer, z.B. 10 Sekunden, wieder eingeschaltet werden, wenn es in diesem Betriebszustand zu großen Drehzahlunterschieden zwischen den Rädern an beiden Seiten des Straßenfertigers kommen sollte.

Baulich einfach, robust und kompakt ist eine weitere Ausführungsform. Auch bei überholendem Rad wird die Drehzahl des zugehörigen Hydromotors des Vorderradantriebs ordnungsgemäß gemeldet und an die Betriebsbedingungen angepaßt, so daß der permanente Allradantrieb bedarfsabhängig aktivierbar ist, ohne bei Nichtbedarf mit geschlepptem Hydromotor zu laufen bzw. beim Zuschalten und in der Anlaufphase zu bremsen. Der Richtungsfreilauf zeichnet sich dadurch aus, daß er bei überholendem Rad praktisch keinen Kraftschluß herstellt, hingegen bei treibendem Hydromotor einen schlupffreien Kraftschluß bewirkt. Für diesen Zweck können selbsttätig eingreifende bzw. sich selbsttätig lösende Freilaufelemente innerhalb des Freilaufes vorgesehen sein, die gegebenenfalls in Richtung auf die Eingriffsstellung elastisch vorgespannt sind.

Bei einer weiteren Ausführungsform stellt sich der permant passive Allradantrieb des Straßenfertigers zunächst auf die gewählte, theoretische Arbeitsgeschwindigkeit ein und wird dann erst an die tatsächlichen Fahrbedingungen oder Traktionsbedingungen angepaßt, die von der theoretischen Sollgeschwindigkeit und den theoretisch vorausgesetzten Fahr- und Traktionsbedingungen abweichen.

Bei einer weiteren Ausführungsform lassen sich bei Kurvenfahrt dank der Einzelrad-Antriebseinheiten an jeder Fertigerseite unterschiedliche Drehzahlen einstellen, was zu optimalem Traktionsverhalten des Straßenfertigers führt.

Anhand der Zeichnung wird eine Ausführungsform des Erfindungsgegenstandes erläutert. Es zeigen:
- Fig. 1: eine schematische Seitenansicht eines Straßenfertigers mit Allradantrieb,
- Fig. 2: ein schematisches Blockschaltbild des Allradantriebs des Straßenfertigers von Fig. 1, und
- Fig. 3: einen Achsschnitt eines Vorderrades des Straßenfertigers mit integrierter hydrostatischer Einzelrad-Antriebseinheit.

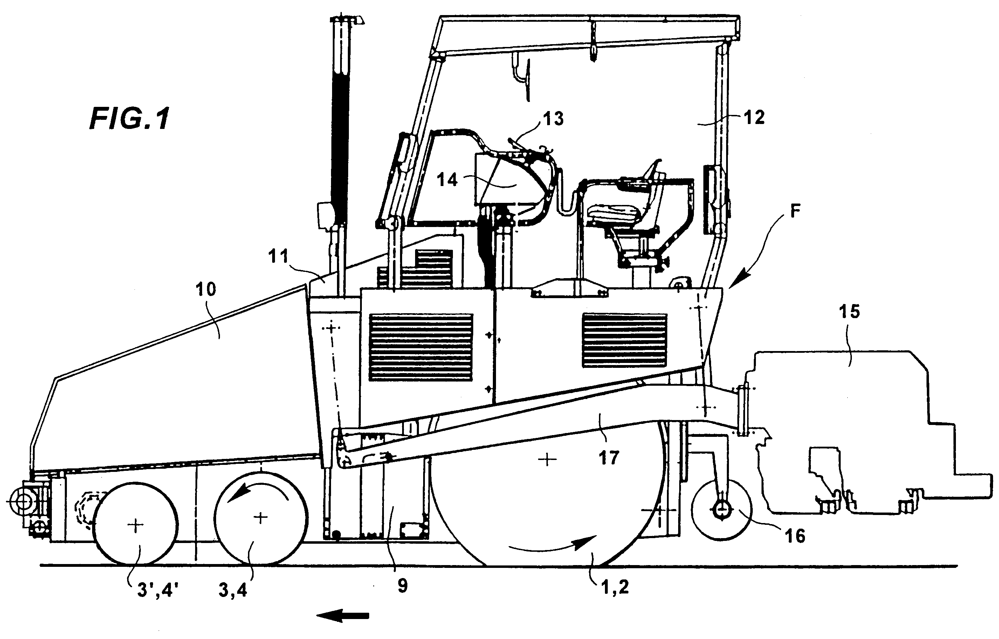

Ein Straßenfertiger F gemäß Fig. 1 ist mit hinteren und vorderen Räderfahrwerken an einem Chassis 9 ausgestattet, das vorne einen Gutbunker 10, in der Mitte als Primärantriebsaggregat einen Dieselmotor 11, und oberhalb desselben einen Führerstand 12 mit Bedienelementen 13 und einem Steuerpult 14 trägt. Das hintere Fahrwerk besteht beispielsweise aus zwei großen Rädern 1, 2. Das vordere Fahrwerk besteht beispielsweise aus vier in Tandemanordnung vorgesehenen kleinen Rädern 3, 4; 3', 4'. Der Straßenfertiger F ist in einem Arbeitsgeschwindigkeitsbereich mit geringer Einbaugeschwindigkeit bis zu ca. 20 m/min in der mit einem Pfeil angedeuteten Fahrtrichtung fahrbar und zum Transport in einem wesentlich höherliegenden Transportgeschwindigkeitsbereich bis zu ca. 25 km/h. Der Straßenfertiger ist mit einem permanent passiven Allradantrieb ausgestattet, mit dem innerhalb des Arbeitsgeschwindigkeitsbereiches die beiden hinteren Räder 1, 2 stets, die beiden hinteren Tandemräder 3, 4 der vorderen Räder 3, 4, 3', 4' hingegen nur bedarfsabhängig, aktiv antreibbar sind.

Am Chassis 9 sind seitlich Ausleger 17 angebracht, an denen eine Einbaubohle 15 befestigt ist, die das aus dem Gutbunker 10 durch das Chassis 9 nach hinten geförderte Einbaugut, das mittels einer Verteileinrichtung 16 auf den Untergrund verteilt wird, einbaut.

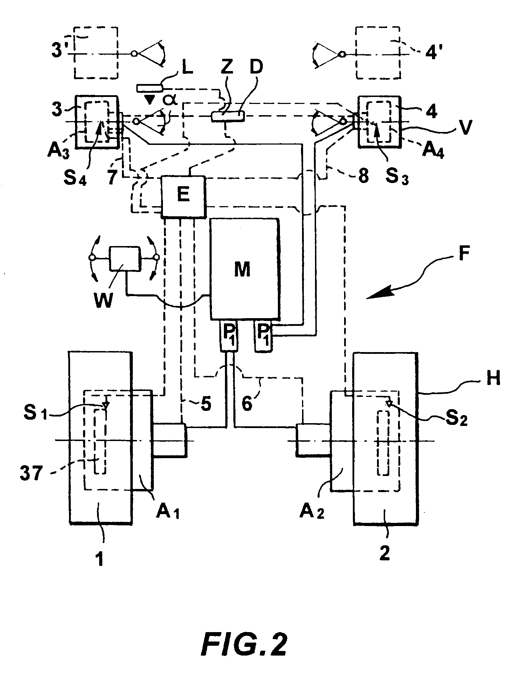

Im Blockschaltbild der Fig. 2 ist die Verknüpfung einzelner Komponenten des Straßenfertigers angedeutet.

In jedem Rad 1, 2 ist eine hydrostatische Einzelrad-Antriebseinheit A1 und A2 angeordnet, die (nicht im Detail hervorgehoben) aus einem schaltbaren Planetenradgetriebe 37, einem Reduktionsgetriebe und einem Hydromotor besteht. Als Antriebsquelle ist ein Motor M angedeutet, der entweder Hydraulikpumpen P1, P2 für die einzelnen zu betätigenden Komponenten des Straßenfertigers F direkt oder über einen dazwischengeschalteten Generator treibt. Die Hydraulikpumpe P1 ist mit den beiden Einzelrad-Antriebseinhei-ten A1, A2 der Hinterachse H verbunden. Eine Geschwindigkeitswählvorrichtung W steuert den Motor M. An der Geschwindigkeitswählvorrichtung (im Führerstand 12 von Fig. 1) kann die Arbeitsgeschwindigkeit als Sollwert eingestellt werden (oder die Transportfahrgeschwindigkeit). Eine elektronische Korrektur- und Regeleinrichtung E ist an die Geschwindigkeitswählvorrichtung angeschlossen und über Stelleitungen 5, 6 mit Stellgeräten der Hydromotoren der Antriebseinheiten A1, A2 sowie den Schaltgetrieben 37 verbunden. Sensoren S1 und S2 tasten die Ist-Drehzahlen der Räder 1, 2, zweckmäßigerweise in den Schaltgetrieben, ab und sind an die elektronische Korrektur- und Regeleinrichtung E angeschlossen.

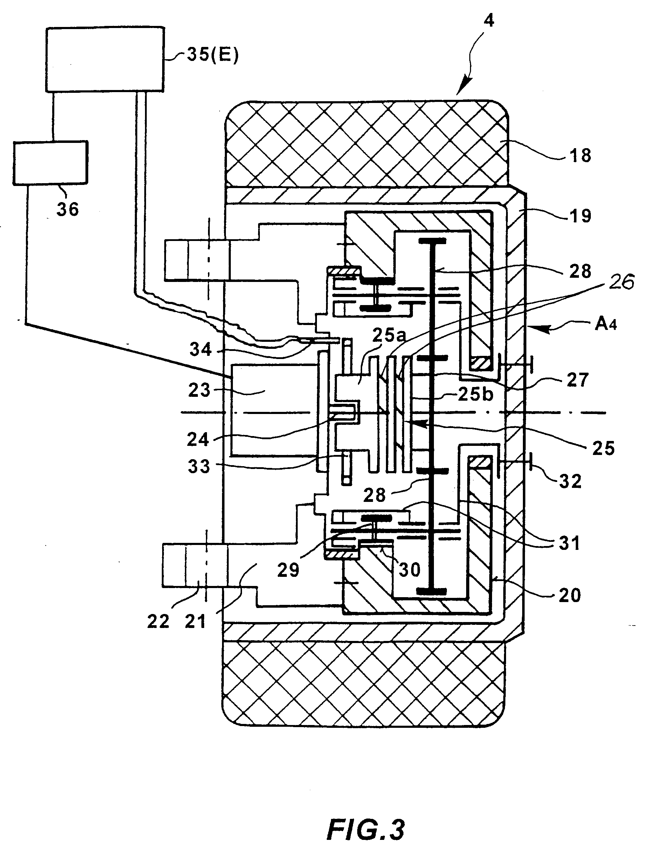

Die zweite Pumpe P2 ist mit Einzelrad-Antriebseinheiten A3 und A4 verbunden, die als Radnaben-Antriebseinheiten in die Vorderräder 3, 4 eingebaut sind und deren Detailaufbau aus Fig. 3 zu entnehmen ist.

Die vorderen Räder 3, 3', 4, 4' sind lenkbar, wie durch den Winkel α angedeutet ist. Sensoren S3 und S4 tasten die Drehzahlen der vorderen Räder 3, 4 ab und übermitteln diese an die Korrektur- und Regeleinrichtung E. Ferner können (nicht gezeigte) Sensoren zum Abtasten der Drehzahl der Hydromotoren der vorderen Antriebseinheiten A3 und A4 vorgesehen und an die Korrektur- und Regeleinrichtung angeschlossen sein. Über Leitungen 7, 8 werden die Stelleinrichtungen oder Stellgeräte der Hydromotoren der Antriebseinheiten A3 und A4 zur Drehzahlkorrektur bzw. Drehzahlregelung der Hydromotoren gesteuert. Ferner ist eine Lenkwinkel-Abtastvorrichtung L vorgesehen, die ebenfalls mit der Korrektur- und Regeleinrichtung verbunden sein kann. Schließlich ist eine elektronische, zuund abschaltbare Differentialsperre zwischen den Antriebseinheiten A3 und A4 vorgesehen, die mit der Lenkwinkel-Abtastvorrichtung L verbunden ist und eine eigene Zu- und Abschaltvorrichtung Z enthält.

Gemäß Fig. 3 (Schnitt des Rades 4) ist auf einer Radnabe 19 ein Reifen 18 angeordnet. Die Radnabe 19 ist auf einem Gehäuse 20 der Antriebseinheit A4 drehbar gelagert. Das Gehäuse 20 ist an Tragteilen 21 angeordnet, die in angedeuteten Lenkachsen 22 relativ zum Chassis des Straßenfertigers verschwenkbar sind, und zwar mittels einer (nicht dargestellten) Lenkvorrichtung. Am Gehäuse 20 ist ein Hydromotor 23 angebracht, der von der Pumpe P2 versorgt wird und eine Ausgangswelle 24 besitzt, die über einen Richtungs-Freilauf 25 entweder ein Sonnenrad 27 eines Planetenradgetriebes treibt oder mittels des Richtungsfreilaufes 25 von diesem getrennt ist. Der Richtungsfreilauf 25 weist eine erste Eingangsnabe 25a auf, die auf eine zweite, mit dem Sonnenrad 27 verbundene Eingangsnabe 25b ausgerichtet ist. Zwischen den Haben 25a und 25b befinden sich Freilaufelemente 26, die so angeordnet und ausgebildet sind, daß sie die Naben 25a und 25b formschlüssig miteinander verbinden, sobald in der Arbeitsfahrtrichtung gemäß Fig. 1 der Hydromotor 23 so schnell läuft wie das Rad 4, hingegen die Naben 25a, 25b von-einander vollständig trennen, sobald das Sonnenrad 27 in Vorwärtsfahrtrichtung schneller läuft als der Hydromotor 23.

Auf der ersten Eingangsnabe 25a ist ein Testrad 33 angebracht, das in Umfangsrichtung verteilte Geber trägt, auf die ein Sensor 34 ausgerichtet ist, der mit einer Elektronik 35 bzw. der elektronischen Korrektur- oder Regeleinrichtung E von Fig. 2 verbunden ist. Die Elektronik 35 ist ihrerseits mit einem Steuergerät 36 verbunden, das die Drehzahlen des Hydromotors 23 einstellt.

Das Sonnenrad 27 treibt Planetenräder 28, die in einem Planetenradträger 31 drehbar gelagert sind. Der Planetenradträger 31 ist im Gehäuse 20 drehbar gelagert. Die Planetenräder 28 sind mit koaxialen, kleineren Zahnrädern 29 drehfest verbunden, die in einer Innenverzahnung 30 des Gehäuses 20 ablaufen. Der Planetenradträger 31 ist bei 32 mit der Radnabe 19 drehfest verbunden. Das Planetenradgetriebe arbeitet untersetzend, so daß bei relativ hoher Drehzahl des Hydromotors und eingerücktem Richtungsfreilauf 25 eine relativ niedrige Drehzahl des Rades 4 einstellbar ist.

### Funktion:

In Arbeitsfahrt treiben die Hydraulikpumpen P1, P2 die Hydromotoren aller vier Antriebseinheiten A1 bis A4. Die Arbeitsgeschwindigkeit ist an der Wähleinrichtung theoretisch gewählt. Die Ist-Drehzahlen der Räder 1 bis 4 werden an die elektronische Korrektur- und -Regeleinrichtung E gemeldet, die die Drehzahlen der Hydromotoren der Antriebseinheiten A1 und A2 auf übliche Weise regelt und auch die Drehzahlen der Hydromotoren der Antriebseinheiten A3 und A4 an diese Drehzahlen anpaßt. Bei Geradeausfahrt und ohne nennenswerten Schlupf beteiligen sich alle vier Räder 1 bis 4 an der Traktion. Die Richtungsfreiläufe in den Antriebseinheiten A3 und A4 verbinden die Hydromotoren mit den Rädern 3, 4. Der Straßenfertiger fährt mit permanentem Allrad-Antrieb. Kommt es zu einem Schlupf bei einem der Räder, dann wird das Drehmoment des zugehörigen Hydromotors zurückgenommen und werden die Drehmomente der anderen Hydromotoren gesteigert.

In der Anlaufphase bremsen die dann bauartbedingt langsameren oder mit geringem Drehmoment arbeitenden Hydromotoren der Antriebseinheit A3 und A4 den Straßenfertiger nicht, da die Richtungsfreiläufe die Hydromotoren von den Rädern 3, 4 trennen. Die jeweiligen Planetenradgetriebe in den vorderen Rädern 3, 4 werden vom Rad geschleppt und überholen den Hydromotor 23. Sobald die Hydromotoren ausreichend schnell laufen bzw. ein ausreichendes Drehmoment abgeben, verbinden die Richtungsfreiläufe die Hydromotoren über die Planetenradgetriebe mit den Rädern, so daß diese ebenfalls die notwendige Traktion erbringen. Die elektronische Differentialsperre D ist zwischen den Rädern 3, 4 einschaltet.

Wird eine Kurve gefahren, dann meldet die LenkwinkelAbtastvorrichtung L den Lenkwinkel an die Korrektur- und Regeleinrichtung E, die dann gegebenenfalls für die beiden hinteren Räder 1, 2 dem Lenkwinkel entsprechend unterschiedliche Drehzahlen einsteuert. Überschreitet der Lenkwinkel einen vorbestimmten Wert, z.B. ± 10° aus der Geradeausstellung, dann wird die Abschaltvorrichtung Z der elektronischen Differentialsperre D aktiviert und die elektronische Differentialsperre D abgeschaltet. Die elektronische Korrektur- bzw. Regeleinrichtung E kann dann, falls dies für zweckmäßig gehalten wird, dem Lenkwinkel α entsprechend unterschiedliche Drehzahlen für die beiden Räder 3, 4 einsteuern. Wird bei dieser Kurvenfahrt der Drehzahlunterschied zwischen den Rädern 3,4 erheblich größer als es dem Lenkwinkel entspricht, dann wird die elektronische Differentialsperre D kurzzeitig, z.B für jeweils 10 Sek., wieder zugeschaltet, um die Traktion bei Kurvenfahrt zu verbessern.

Sobald die vorderen Räder 3, 4 schneller laufen als ihre Hydromotoren, dann werden die Hydromotoren mittels des Richtungsfreilaufes von den Rädern getrennt; die Räder laufen frei.

Wird der Straßenfertiger F bei Transportfahrt mit Transportgeschwindigkeit gefahren, was (an der Wähleinrichtung W eingestellt; die Schaltgetriebe 37 in den Rädern 1, 2 sind umgestellt), dann laufen die Hydromotoren der Antriebseinheiten A3, A4 mit einer der Arbeitsgeschwindigkeit entsprechenden Drehzahl, oder sie werden stillgesetzt. Dank der Richtungsfreiläufe werden die Hydromotoren von den Rädern 3, 4 nicht geschleppt; die Räder 3, 4 überholen die Hydromotoren.

Der Straßenfertiger benötigt nicht unbedingt vier vordere Räder, sondern könnte auch mit nur zwei vorderen Rädern ausgestattet sein. Sind - wie gezeigt - vier vordere Räder 3, 4, 3', 4' vorgesehen, dann wäre es auch denkbar, alle vier vorderen Räder anzutreiben.

## Patentansprüche

1. Straßenfertiger (F) mit hinteren und vorderen Räderfahrwerken und einem hydrostatischen Allrad-Antrieb, bei dem zusätzlich zu hinteren antreibbaren Rädern (1, 2) im vorderen Räderfahrwerk zumindest zwei Räder (3, 4, 3', 4') mittels je einer hydrostatischen, einen drehzahlverstellbaren Hydromotor (23) enthaltenden Radnaben-Antriebseinheit (A3, A4) antreibbar sind, **dadurch gekennzeichnet**, daß jede hydrostatische Radnaben-Antriebseinheit (A3, A4) einen permanent angetriebenen Hydromotor (23), ein das vordere Rad (3, 4) untersetzendes treibendes Planetenradgetriebe (27 bis 31) und einen zwischen dem Hydromotor und dem Planetenradgetriebe angeordneten Richtungsfreilauf (25) aufweist, mit dem der Hydromotor (23) selbsttätig in Vorwärtsantriebsrichtung mit dem Planetenradgetriebe entwederformschlüssig verbindbar oder vollständig von dem Planetenradgetriebe lösbar ist, und daß eine elektronische, mit Geschwindigkeits- bzw. Drehzahlsensoren (S1 bis S4) für die Ist-Drehzahlen der antreibbaren Räder (1 bis 4) verbundene Korrektur- und Regeleinrichtung (E) vorgesehen und mit den Antriebseinheiten (A3, A4) bzw. Hydromotoren (23) der vorderen Räder (3, 4) und mit Einzelantriebseinheiten (A1, A2) der hinteren Räder (1, 2) nachstellend verbunden ist, um bei positivem oder negativem Zwangsschlupf zwischen den hinteren und den vorderen antreibbaren Rädern (1 bis 4) die Drehzahlen der Antriebseinheiten individuell zu korrigieren.

2. Straßenfertiger nach Anspruch 1, **dadurch gekennzeichnet**, daß die hydrostatischen Radnaben-Antriebseinheiten (A3, A4) in die Radnaben (19) eingebaut sind, und daß der Richtungsfreilauf (25) zwischen einer Ausgangswelle (24) des Hydromotors (23) und einem Sonnenrad (27) des Planetenradgetriebes angeordnet ist.

3. Straßenfertiger nach Anspruch 1, **dadurch gekennzeichnet**, daß der Hydromotor (23) permanent mit einer Drehzahl antreibbar ist, die mit der innerhalb des Arbeitsfahrtgeschwindigkeitsbereichs angegebenen Ist-Arbeitsfahrt-Geschwindigkeit des Straßenfertigers (F) korrespondiert.

4. Straßenfertiger nach wenigstens einem der Ansprüche 1 bis 3, **dadurch gekennzeichnet**, daß die hydrostatischen Einzelrad-Antriebseinheiten (A1, A2) für die hinteren antreibbaren Räder (1,2) jeweils ein zumindest zwischen einer Arbeitsfahrt- und einer Transportfahrtstufe umschaltbares Planetenradgetriebe (37) enthalten.

5. Straßenfertiger nach den Ansprüchen 1 bis 3, **dadurch gekennzeichnet**, daß zwischen den vorderen antreibbaren Rädern (3, 4) eine bis zu einem vorbestimmten Lenkwinkel (α) aus der Geradeausstellung, z.B. ± 10°, innerhalb des Arbeitsgeschwindigkeitsbereiches zugeschaltete elektronische Differentialsperre (D) vorgesehen ist.

6. Straßenfertiger nach den Ansprüchen 1 und 5, **dadurch gekennzeichnet**, daß die elektronische Differentialsperre eine automatische Abschaltvorrichtung (Z) aufweist, und daß eine an die Korrektur- bzw. Regeleinrichtung (E) angeschlossene Lenkwinkel-Abtastvorrichtung (L) vorgesehen ist, mit der ab Erreichen eines vorbestimmten Lenkwinkels (α), z.B. ± 10°, aus der Geradeausstellung der Räder (3, 4) ein Abschaltsignal an die Abschaltvorrichtung (Z) übermittelbar ist.

7. Straßenfertiger nach den Ansprüchen 1,5 und 6, **dadurch gekennzeichnet**, daß die über die automatische Abschaltvorrichtung (Z) abgeschaltete Differentialsperre (D) über eine Zeitschaltvorrichtung für eine vorbestimmte Zeitdauer, z.B. jeweils 10 Sekunden, zuschaltbar ist unter Ansprechen auf ein einen vorbestimmten erheblichen Drehzahlunterschied zwischen den Rädern repräsentierendes Zuschaltsignal der Korrektur- und Regeleinrichtung (E) oder eines mit den Geschwindigkeits- bzw. Drehzahlsensoren (S1 bis S4) verbundenen Steuergeräts (36).

8. Straßenfertiger nach den Ansprüchen 1 und 2, **dadurch gekennzeichnet**, daß der Richtungsfreilauf (25) eine mit der Ausgangswelle (24) des Hydromotors (23) drehfest verbundene erste Eingangsnabe (25a) und eine mit dem Sonnenrad (27) drehfest verbundene zweite Eingangsnabe (25b) aufweist, zwischen den wirkungsmäßig Freilaufeinrichtungen (26) vorgesehen sind, daß auf der ersten Eingangsnabe (25a) ein Testrad (33) mit in Umfangsrichtung verteilten Gebern angeordnet ist, und daß ein auf die vorbeilaufenden Gebern ausgerichteter Sensor (34) stationär positioniert und über einen Elektronikkreis (35) zur Einstellung der Drehzahl des Hydromotors (23) mit der Korrektur- und und Regeleinrichtung (E) verbunden ist.

9. Straßenfertiger nach Anspruch 1, **dadurch gekennzeichnet**, daß die elektronische Korrektur- bzw Regeleinrichtung (E) mit einer Geschwindigkeitswählvorrichtung (W) für die Sollgeschwindigkeit des Straßenfertigers (F) verbunden ist.

10. Straßenfertiger nach den Ansprüchen 1 und 6, **dadurch gekennzeichnet**, daß über die Korrektur- und Regeleinrichtung (E) und die Lenkwinkelabstastvorrichtung (L) lenkwinkelabhängige Stellsignale erzeugbar sind, um an beiden Fertigerseiten unterschiedliche Drehzahlen an den linken bzw. rechten Hydromotoren der hinteren oder/und vorderen Räder (1 bis 4) einzustellen.

## Claims

1. A road finisher (F) comprising rear and front wheel carriage units and a hydrostatic all-wheel drive, wherein, in addition to rear drivable wheels (1, 2), at least two wheels (3, 4, 3', 4') are drivable in the front wheel carriage unit by means of a respective hydrostatic wheel-hub drive unit (A3, A4) containing a speed-adjustable hydraulic motor (23), **characterized in** that each hydrostatic wheel-hub drive unit (A3, A4) has a permanent driven hydraulic motor (23), a planetary gear set (27 to 31) driving the front wheel (3, 4) in a speed reducing ratio, and a unidirectional overriding clutch (25) arranged between said hydraulic motor and said planetary gear set for either positively connecting said hydraulic motor (23) automatically in the forward drive direction to said planetary gear set or for completely releasing it from said planetary gear set, and that an electronic correction and control means (E) which is provided with speed sensors (S1 to S4) for the actual speeds of the drivable wheels (1 to 4) is provided and adjustingly connected to the respective drive units (A1 to A4) and to the hydraulic motors (23), respectively, of the front wheels (3, 4) and to the single-drive units (A1, A2) of the rear wheels (1, 2) to correct the speeds of the the drive units individually in case of a positive or negative forced slippage between the rear and the front drivable wheels (1 to 4).

2. The road finisher according to claim 1, **characterized in** that said hydrostatic wheel-hub drive units (A3, A4) are installed in said wheel hubs (19), and that said unidirectional overriding clutch (25) is arranged between an output shaft (24) of said hydraulic motor (23) and a sun gear (27) of said planetary gear set.

3. The road finisher according to claim 1, characterized in that said hydraulic motor (23) is permanently drivable at a speed which corresponds to the actual working drive speed of said road finisher (F) that is given within the working travel speed range.

4. The road finisher according to at least one of claims 1 to 3, **characterized in** that each of the hydrostatic single-wheel drive units (A1 to A4) for the rear drivable wheels (1, 2) contains a planetary gear set (37) which is at least switchable between a working travel stage and a transporting travel stage.

5. The road finisher according to claims 1 to 3, **characterized in** that an electronic differential lock (D) which is connected up to a predetermined steering angle (α) from the straight position, e.g. ± 10°, within the operating speed range is provided between the front drivable wheels (3, 4).

6. The road finisher according to claims 1 and 5, **characterized in** that said electronic differential lock comprises an automatic switch-off device (Z), and that a steering-angle sensing device (L) which is connected to said correction or control means (E) is provided for transmitting a switch-off signal to said switch-off device (Z) as soon as a predetermined steering angle (α), e.g. ± 10°, from the straight position of said wheels (3, 4) has been reached.

7. The road finisher according to claims 1, 5 and 6, **characterized in** that said differential lock (D) which is switched off via the automatic switch-off device (Z) is connectable via a time switching means for a predetermined period of time, e.g. 10 seconds each time, in response to a connection signal which represents a predetermined considerable speed difference between the wheels and is supplied by the correction and control means (E) or a control device (36) connected to the speed sensors (S1 to S4).

8. The road finisher according to claims 1 and 2, **characterized in** that said unidirectional overriding clutch (25) has a first input hub (25a) which is rigidly connected to the output shaft (24) of said hydraulic motor (23), and a second input hub (25b) rigidly connected to said sun gear (27), between the operative free-wheel means (26), that a test wheel (33) with circumferentially distributed transmitters is arranged on said first input hub (25a), and that a sensor (34) which is aligned relative to the passing transmitters is stationarily positioned and connected via an electronic circuit (35) to said correction and control means (E) for setting the speed of said hydraulic motor (23).

9. The road finisher according to claim 1, **characterized in** that said electronic correction or control means (E) is connected to a speed selection device (W) for the desired speed of said road finisher (F).

10. The road finisher according to claims 1 and 6, **characterized in** that steering-angle dependent adjusting signals can be produced via said correction and control means (E) and said steering-angle sensing device (L) for adjusting different speeds at the two finisher sides at the left and right hydraulic motors of the rear or/and front wheels (1 to 4).

## Revendications

1. Finisseur (F) comprenant des mécanismes de roulement à roues arrière et avant et une commande hydrostatique toutes roues motrices, avec laquelle, en plus des roues arrière (1, 2) pouvant être motrices, au moins deux roues (3, 4, 3', 4'), dans le mécanisme de roulement à roues avant, peuvent être commandées chacune au moyen d'une unité de commande hydrostatique (A3, A4) des moyeux de roue contenant un moteur hydraulique (23) à vitesse de rotation réglable, caractérisé en ce que chaque unité de commande hydrostatique (A3, A4) des moyeux de roue comprend un moteur hydraulique (23) commandé en permanence, un engrenage à pignons satellites (27 à 31) entraînant de manière démultiplicatrice la roue avant (3, 4) et une roue libre directionnelle (25) située entre le moteur hydraulique et l'engrenage à pignons satellites et grâce à laquelle le moteur hydraulique (23) peut être soit relié par conjugaison de forme à l'engrenage à pignons satellites, soit complètement séparé de l'engrenage à pignons satellites, et ce de manière automatique dans la direction de commande en avant, et en ce que l'on prévoit un dispositif électronique de correction et de réglage (E) relié à des capteurs de vitesse resp. vitesse de rotation (S1 à S4) pour les vitesses de rotation réelles des roues motrices (1 à 4), lequel dispositif est relié, d'une manière permettant un réglage, aux unités de commande (A3, A4) resp. moteurs hydrauliques (23) des roues avant (3, 4) et à des unités de commande individuelle (A1, A2) des roues arrière (1, 2) afin de corriger de façon individuelle les vitesses de rotation des unités de commande en cas de glissement forcé positif ou négatif entre les roues motrices arrière et avant (1 à 4).

2. Finisseur selon la revendication 1, caractérisé en ce que les unités de commande hydrostatique (A3, A4) des moyeux de roue sont montées dans les moyeux de roue (19) et en ce que la roue libre directionnelle (25) est située entre un arbre de sortie (24) du moteur hydraulique (23) et une roue solaire (27) de l'engrenage à pignons satellites.

3. Finisseur selon la revendication 1, caractérisé en ce que le moteur hydraulique (23) peut être commandé en permanence avec une vitesse de rotation qui correspond à la vitesse réelle de roulement pendant le travail du finisseur (F) indiquée à l'intérieur de la gamme de vitesses de roulement pendant le travail.

4. Finisseur selon au moins une des revendications 1 à 3, caractérisé en ce que les unités de commande hydrostatique (A1, A2) des roues individuelles pour les roues motrices arrière (1, 2) contiennent, à chaque fois, un engrenage à pignons satellites (37) pouvant être commuté au moins entre une vitesse de roulement pendant le travail et une vitesse de roulement pendant le transport.

5. Finisseur selon les revendications 1 à 3, caractérisé en ce que l'on prévoit, entre les roues motrices avant (3, 4), un blocage de différentiel électronique (D) mis en circuit à l'intérieur de la gamme de vitesses de travail, jusqu'à un angle directeur (α) prédéterminé par rapport à la position droite, égal à ± 10° par exemple.

6. Finisseur selon les revendications 1 et 5, caractérisé en ce que le blocage de différentiel électronique comprend un dispositif de mise hors circuit automatique (Z) et en ce que l'on prévoit un dispositif de balayage (L) de l'angle directeur connecté au dispositif de correction resp. réglage (E) et grâce auquel, à partir du moment où on atteint un angle directeur (α) prédéterminé, égal à ± 10° par exemple, par rapport à la position droite des roues (3, 4), un signal de mise hors circuit peut être transmis au dispositif de mise hors circuit (Z).

7. Finisseur selon les revendications 1, 5 et 6, caractérisé en ce que le blocage de différentiel (D) mis hors circuit par le biais du dispositif de mise hors circuit automatique (Z) peut être mis en circuit pour une durée prédéterminée, égale à chaque fois à 10 secondes par exemple, par le biais d'un dispositif de commutation temporisé, en réponse à un signal de mise en circuit du dispositif de correction et de réglage (E) ou d'un organe de commande (36) relié aux capteurs de vitesse resp. vitesse de rotation (S1 à S4), signal représentant une différence de vitesse de rotation importante prédéterminée entre les roues.

8. Finisseur selon les revendications 1 et 2, caractérisé en ce que la roue libre directionnelle (25) est pourvue d'un premier moyeu d'entrée (25a) relié à l'arbre de sortie (24) du moteur hydraulique (23) d'une manière empêchant la rotation et d'un second moyeu d'entrée (25b) relié à la roue solaire (27) d'une manière empèchant la rotation, entre lesquels on prévoit fonctionnellement des dispositifs de roue libre (26), en ce qu'une roue test (33) pourvue de transmetteurs répartis dans la direction circonférentielle est située sur le premier moyeu d'entrée (25a) et en ce qu'un capteur (34) aligné sur les transmetteurs qui passent devant lui est positionné de manière fixe et est relié au dispositif de correction et de réglage (E), par le biais d'un circuit électronique (35), en vue du réglage de la vitesse de rotation du moteur hydraulique (23).

9. Finisseur selon la revendication 1, caractérisé en ce que le dispositif électronique de correction resp. réglage (E) est relié à un dispositif de sélection de la vitesse (W) pour la vitesse de consigne du finisseur (F).

10. Finisseur selon les revendications 1 et 6, caractérisé en ce que l'on peut produire, par le biais du dispositif de correction et de réglage (E) et du dispositif de balayage de l'angle directeur (L), des signaux de réglage dépendant de l'angle directeur afin de régler, sur les deux côtés du finisseur, des vitesses de rotation différentes au niveau des moteurs hydrauliques gauche resp. droit des roues arrière et/ou avant (1 à 4).
